# EUROPEAN PATENT SPECIFICATION

(11) **EP 0 545 025 B1**
(45) Date of publication and mention of the grant of the patent: **03.07.1996**
(21) Application number: 92117037.9
(22) Date of filing: 06.10.1992
(51) Int. Cl.: A23P 1/16

(54) **Souffle mix**
Souffle Mischung
Mélange pour soufflé

(30) Priority: 07.10.1991 US 772512
(43) Date of publication of application: 09.06.1993
(73) Proprietor: CPC INTERNATIONAL INC., Englewood Cliffs New Jersey 07632-9976 (US)
(72) Inventor: Tuazon, Marlene T., Hopatcong, N.J. 07843 (US); Foster, Lynne C., Plainfield, N.J. 07060 (US)
(74) Representative: Lederer, Franz, Dr.

(56) References cited:
- FR-A- 2 615 697
- US-A- 3 038 808
- US-A- 3 078 168
- US-A- 3 459 560
- US-A- 3 713 845
- US-A- 4 592 919

## Description

This invention relates to a dry souffle mix. More particularly, it relates to a reconstitutable dessert souffle and the process for preparing the same.

The preparation of souffles has long been considered a time consuming and complicated operation with no assurance that the resulting souffle would be satisfactory. The preparation of a souffle is tedious due to the need for exact measurement of the relative amounts of the ingredients to achieve the desired texture and airiness of the final product. Furthermore, once baked, the souffle must be served without delay to insure its freshness and prevent its collapse.

Various attempts have been made over the years to develop alternates to homemade souffles so that souffles may be more readily available to the general public. U.S. Patent No. 3,043,700 to Szezesniak discloses and claims a two-package souffle mix in which the first package contains dried egg white and an egg white improving agent and the second package contains dried pregelatinized starch, a powdered fat, a protein and a low weight polysaccharide. The polysaccharide employed should be one which has been hydrolyzed sufficiently so as not to cause excessive viscosity in the mix, yet has been insufficiently hydrolyzed to change its polymer character so that it can still be attacked by diastatic enzymes in preference to the pregelatinized starch. When fresh egg yolk is added to the mix, the diastatic enzymes preferentially attack the low molecular weight polysaccharide, the starch is permitted to function in its normal manner and provide the required viscosity for the sauce.

In U.S. Patent No. 3,655,405 Karas et al., what is disclosed and claimed is a two-package, essentially fat-free composition comprising a first package containing a dry sauce mix and a second package containing a dry albumen mix. The dry sauce mix comprises a blend of regular starch, pregelatinized starch, whey solids and a flavoring agent. The dry albumen mix comprises a blend of egg white solids, a leavening agent and a stabilizing agent.

A freezable culinary preparation for sweet souffles is disclosed and claimed in U.S. Patent No. 4,068,013 to Brule. The frozen souffle comprises a homogenous mixture of a cooked pastry cream, uncooked chou paste and stiffly beaten egg whites in a volume ratio of about 1.5:1:1.5, based upon the volume of basic liquid of each ingredient. It is disclosed that the admixture of an uncooked chou paste to a cooked pastry cream to which is then incorporated stiffly beaten egg whites, results in a preparation for sweet souffles which can successfully undergo freezing, and can be kept in a frozen state for prolonged storage without any deterioration or alteration of flavor.

An alternate process for the preparation of a composition for frozen or deep frozen souffles is disclosed in U.S. Patent No. 4,428,971 to Havette et al. This frozen souffle is prepared from a base mass comprising a panada base, a flavoring base, egg yolk and a protein base. The panada base comprises fat, flour, water and cream; the flavoring base comprises vegetables, cheese, fish, fruit, and/or sugars; and the texturizing protein base comprises mixing egg white and lactic protein. The bases are mixed together without whipping the proteins, and carbon dioxide gas is incorporated in the mass.

U.S. Patent No 3 459 560 describes a single-stage angel food cake mix comprising farinaceous material, sugar, a chemical leavening base, a leavening acid and gelatinized starch. This dry mix should be reconstituted with an aqueous medium containing egg albumen. The egg albumen may also be contained in the dry mix.

It has now been found that a one package reconstitutable souffle mix can be made which results in a product of good texture and taste and with a longer deflation time. Specifically, a one package dry mix for a souffle comprising powdered egg whites, modified food starch, flour, leavening agent and leavening acid as its main ingredients is disclosed. Other ingredients which may also be incorporated in this single package mix include proteins, colors and flavorants.

The present invention relates to a single package dry mix for a souffle, particularly a sweet souffle. It has been found that a souffle which exhibits highly acceptable flavor, texture and stability can be made from a mix comprising powdered egg whites, modified food starch, flour, a leavening agent and a leavening acid, whereby the leavening agent is encapsulated sodium bicarbonate. Additional ingredients may also be included with these primary ingredients, such as water dispersible protein solids, colors and flavorants. Previous to this invention, it was not possible to have an acceptable dry souffle mix which incorporated all of the ingredients in a single package.

The powdered egg whites used in the present invention consists of powdered egg white solids mixed with a whipping agent. It may be possible to use egg white solids as an individual ingredient and add a whipping agent as a separate component. The powdered egg whites are present in an amount of from about 25 to 50% by weight, preferably about 30 to about 40%.

The preferred modified food starch used herein is Ultra Tex 4® (National starch and Chemical Company, Bridgewater, New Jersey). This is a modified wary maize which is a cold-water swelling starch. Various modified food starches, including pregelatinized starches, would also perform well in the present application. The modified food starch is present in an amount of from about 15 to about 30% by weight, preferably 15 to 25%.

Most types of flours have been found to be acceptable, with all purpose flour the preferred choice. It is present in an amount of from about 10 to about 15% by weight, preferably from about 12 to about 14%. A critical factor is the combination of leavening agent and leavening acid. Sodium bicarbonate has been found to be most effective, particularly when in an encapsulated state. By using encapsulated sodium bicarbonate any reaction which might occur between the leavening agent and the leavening acid is prevented during prolonged storage at high temperatures or high levels of humidity. This way, the leavening agent will be free to react at the required time, during the baking process. The encapsulated sodium bicarbonate is present in an amount of from 5.5 to about 7.5%, preferably 6.0 to 7.0%.

The preferred leavening acid is a combination of dicalcium phosphate dihydrate and cream of tartar. The dicalcium phosphate dihydrate may be present in amounts of from about 9.5 to about 15% by weight, preferably about 10%, and the cream of tartar is present in an amount of from about 1.5 to about 3.5% by weight, preferably 2.0 to 3.0%. The most important factor is the ratio of leavening acid to leavening agent, which is from about 3:1 to about 2:1.

Water dispersible protein solids may also be included to improve the texture and taste of the final product, preferably in the form of non-fat dry milk. This is added to the mix at a level of from about 5 to about 10% of the mix, preferably from about 7.0 to about 8.0%.

The final flavor and color of the product can be modified by the incorporation of various ingredients depending on the desired final product. Examples are the addition of cocoa powder for a chocolate product, lemons and citric acid for a lemon product, cheese, spinach, etc. Colors such as caramel and beta carotene may also be added.

Once the dry mix has been prepared, the preparation of the souffle therefrom is exceedingly simple. Specifically, the dry mix is placed into a bowl, to which a liquid is added. In the case of a sweet souffle, sugar or an artificial sweetener may also be incorporated. Thereafter, the admixture is beaten and the resulting product is then poured into the appropriate containers and baked. In order to optimize the souffle product, the containers should be greased to avoid sticking and burning. The product may be baked by placing it directly in a conventional or convection oven, or it may be placed in a water bath before being placed in the oven. The water bath is the preferred method in that it results in a lighter, moister, airier product. Baking without a water bath results in a product which has a less desirable, more rubbery texture.

Either way, it has been found that the souffle prepared from this mix requires shortened cooking times of from 10 to 30 minutes, preferably 15 to 25 minutes. The product which results from this process exhibits egg-like, soft, moist and light textures similar to those produced from homemade souffles made from scratch. An additional advantage is that the presently disclosed souffle is more stable and has a longer deflation time than a traditional home baked souffle. Furthermore, the risk of failure during preparation and baking is very low compared to that normally found in a home baked souffle.

The following examples further illustrate the present invention, but are not meant to be limiting in any manner:

### Example 1

A dry mix for a chocolate souffle was prepared as follows:

| Ingredients | Percent by weight |
|---|---|
| Egg white powder | 30.6 |
| Modified food starch | 18.0 |
| Encapsulated sodium bicarbonate | 6.2 |
| Cocoa powder | 15.0 |
| Cream of tartar | 2.4 |
| Colors and flavors | 1.1 |
| Dicalcium phosphate dihydrate | 11.0 |
| Flour | 9.0 |
| Non-fat dry milk | 6.7 |

In a small bowl, about 50 grams of the dry mix was combined with 2/3 cups water and 1/4 cup sugar. It was beat on medium speed of a mixer for 2 minutes. The sides of the bowl were scraped, and then the mixture was beat on high speed for 3 minutes. The mixture was placed in a greased container and baked in a water bath for 18 minutes in a 350° oven.

The resulting chocolate souffle exhibited highly acceptable flavor, texture, stability and height characteristics, and did not deflate immediately.

### Example 2

A dry mix for preparing a lemon souffle was prepared by mixing together the following ingredients:

| Ingredients | Percent by weight |
|---|---|
| Powdered egg whites | 35.8 |
| Encapsulated sodium bicarbonate | 6.5 |
| Ultra Tex 4® | 21.0 |
| Flour | 13.3 |
| Non-fat dry milk | 7.9 |
| Cream of tartar | 2.6 |
| Dicalcium phosphate dihydrate | 10.0 |
| Flavorants | 2.9 |

About 50 grams of the dry mix was placed in a bowl to which 3 tablespoons sugar and 2/3 cup water were added. The admixture was beaten for 2 minutes at medium speed and then 3 minutes at high speed. It was poured into a greased baking dish which was placed in a water bath and baked in a 350° oven for 15 minutes.

The resulting lemon souffle exhibited highly acceptable flavor, texture and stability.

## Claims

1. A one package dry souffle mix comprising powdered egg whites, modified food starch, flour, a leavening agent and a leavening acid, characterized in that the leavening agent is encapsulated sodium bicarbonate.

2. The one package dry souffle mix of claim 1 which further comprises water dispersible protein solids.

3. The one package dry souffle mix of claim 2, wherein the water dispersible protein solids is non-fat dry milk.

4. The one package dry souffle mix of one of claims 1-3 wherein the leavening acid is a combination of dicalcium phosphate dihydrate and cream of tartar.

5. The souffle mix of one of the preceding claims which further comprises flavors and colors.

6. The one package dry souffle mix of claim 4 wherein the powdered egg whites are present in an amount of from 25 to 50%, modified food starch is present from 15 to 30%, flour is present in an amount of from 10 to 15%, encapsulated sodium bicarbonate is present from 5.5 to 7.5% by weight, dicalcium phosphate dihydrate is present from 9.5 to 15%, and cream of tartar is present from 1.5 to 3.5% by weight.

7. A method for preparing a souffle comprising:
(a) adding a liquid to a dry mix comprising powdered egg whites, modified food starch, flour, a leavening agent and a leavening acid to provide a smooth admixture;
(b) beating the admixture of (a); and
(c) baking,
characterized in that the leavening agent is encapsulated sodium bicarbonate.

8. The method of claim 7 wherein the souffle is baked for from 10 to 30 minutes.

9. The method of claim 8 wherein the souffle is baked from 15 to 25 minutes.

10. The method of one of claims 7-9 which further comprises non-fat dry milk in the dry mix of (a).

11. The method of one of claims 7-10 which further comprises flavorants and colors in the dry mix of (a).

12. The method of one of claims 7-11 where the baking is done in a water bath.

## Patentansprüche

1. Soufflé-Trockenmischung als Einzelpackung, umfassend Eiklarpulver, modifizierte Stärke für Nahrungsmittel, Mehl, ein Treibmittel und eine Treibsäure, dadurch gekennzeichnet, daß das Treibmittel eingekapseltes Natriumbicarbonat ist.

2. Soufflé-Trockenmischung als Einzelpackung nach Anspruch 1, die außerdem in Wasser dispergierbare Protein-Feststoffe umfaßt.

3. Soufflé-Trockenmischung als Einzelpackung nach Anspruch 2, wobei die in Wasser dispergierbaren Protein-Feststoffe entfettete Trockenmilch sind.

4. Soufflé-Trockenmischung als Einzelpackung nach einem der Ansprüche 1-3, wobei die Treibsäure eine Kombination von Dicalciumphosphatdihydrat und Weinstein ist.

5. Soufflé-Trockenmischung nach einem der vorangehenden Ansprüche, die außerdem Aromastoffe und Färbemittel umfaßt.

6. Soufflé-Trockenmischung als Einzelpackung nach Anspruch 4, wobei das Eiklarpulver in einer Menge von 25 bis 50% vorliegt, die modifizierte Stärke für Nahrungsmittel mit 15 bis 30% vorliegt, Mehl in einer Menge von 10 bis 15% vorliegt, eingekapseltes Natriumbicarbonat mit 5,5 bis 7,5 Gewichtsprozent vorliegt, Dicalciumphosphatdihydrat mit 9,5 bis 15% vorliegt und Weinstein mit 1,5 bis 3,5 Gewichtsprozent vorliegt.

7. Verfahren zur Herstellung eines Soufflés, umfassend:
(a) Zugabe einer Flüssigkeit zu einer Trockenmischung, die Eiklarpulver, modifizierte Stärke für Nahrungsmittel, Mehl, ein Treibmittel und eine Treibsäure umfaßt unter Bereitstellung einer glatten Anmischung;
(b) Schlagen der Anmischung von (a); und
(c) Backen, dadurch gekennzeichnet, daß das Treibmittel eingekapseltes Natriumbicarbonat ist.

8. Verfahren nach Anspruch 7, wobei das Soufflé 10 bis 30 Minuten gebacken wird.

9. Verfahren nach Anspruch 8, wobei das Soufflé 15 bis 25 Minuten gebacken wird.

10. Verfahren nach einem der Ansprüche 7-9, das außerdem entfettete Trockenmilch in der Trockenmischung von (a) umfaßt.

11. Verfahren nach einem der Ansprüche 7-10, das außerdem Geschmacksstoffe und Färbemittel in der Trockenmischung von (a) umfaßt.

12. Verfahren nach einem der Ansprüche 7-11, wobei das Backen in einem Wasserbad erfolgt.

## Revendications

1. Mélange sec pour soufflé, en conditionnement unique, comprenant de la poudre de blancs d'oeufs, de l'amidon alimentaire modifié, de la farine, un agent levant et un acide levant, caractérisé en ce que l'agent levant consiste en bicarbonate de sodium encapsulé.

2. Mélange sec pour soufflé, en conditionnement unique suivant la revendication 1, qui comprend en outre des matières protéiques solides dispersables dans l'eau.

3. Mélange sec pour soufflé, à un composant, suivant la revendication 2, dans lequel les matières protéiques solides dispersables dans l'eau consistent en lait écrémé en poudre.

4. Mélange sec pour soufflé, en conditionnement unique, suivant une des revendications 1 à 3, dans lequel l'acide levant consiste en une association de phosphate dicalcique dihydraté et de crème de tartre.

5. Mélange pour soufflé suivant l'une quelconque des revendications précédentes, qui comprend en outre des agents aromatisants et des colorants.

6. Mélange sec pour soufflé, en conditionnement unique, suivant la revendication 4, dans lequel la poudre de blancs d'oeufs est présente en une quantité de 20 à 50 %, l'amidon alimentaire modifié est présent en une quantité de 15 à 30 %, la farine est présente en une quantité de 10 à 15 %, le bicarbonate de sodium encapsulé est présent en une quantité de 5,5 à 7,5 % en poids, le phosphate dicalcique dihydraté est présent en une quantité de 9,5 à 15 % et la crème de tartre est présente en une quantité de 1,5 à 3,5 % en poids.

7. Procédé de préparation d'un soufflé, comprenant les étapes consistant :
(a) à ajouter un liquide à un mélange sec comprenant de la poudre de blancs d'oeufs, de l'amidon alimentaire modifié, de la farine, un agent levant et un acide levant pour obtenir un mélange uniforme ;
(b) à battre le mélange de (a) ; et
(c) à effectuer une cuisson au four,
caractérisé en ce que l'agent levant consiste en bicarbonate de sodium encapsulé.

8. Procédé suivant la revendication 7, dans lequel le soufflé est cuit au four pendant un temps de 10 à 30 minutes.

9. Procédé suivant la revendication 8, dans lequel le soufflé est cuit au four pendant un temps de 15 à 25 minutes.

10. Procédé suivant une des revendications 7 à 9, dans lequel le mélange sec de (a) comprend en outre du lait écrémé en poudre.

11. Procédé suivant une des revendications 7 à 10, dans lequel le mélange sec de (a) comprend en outre des agents aromatisants et des colorants.

12. Procédé suivant une des revendications 7 à 11, dans lequel la cuisson au four est effectuée dans un bain-marie.
